**Europäisches Patentamt**

**European Patent Office**

**Office européen des brevets**

(19)

(11) Veröffentlichungsnummer: **0 191 369**
**B1**

(12) ## EUROPÄISCHE PATENTSCHRIFT

(45) Veröffentlichungstag der Patentschrift:
**27.09.89**

(51) Int. Cl.⁴: **G 01 D 5/24**

(21) Anmeldenummer: **86101184.9**

(22) Anmeldetag: **30.01.86**

(54) Offener Messkondensator.

(30) Priorität: **15.02.85 DE 3505203**

(43) Veröffentlichungstag der Anmeldung:
**20.08.86 Patentblatt 86/34**

(45) Bekanntmachung des Hinweises auf die Patenterteilung:
**27.09.89 Patentblatt 89/39**

(84) Benannte Vertragsstaaten:
**BE CH DE FR GB IT LI NL**

(56) Entgegenhaltungen:
**EP-A- 0 077 595**
**EP-A- 0 169 272**
**CH-A- 483 632**
**DE-A- 2 641 758**
**DE-A- 3 402 708**
**US-A- 3 858 097**

(73) Patentinhaber: **Heber, Kurt, Dr.-Ing., Im Laimacker 62,**
**D-7802 Merzhausen (DE)**

(72) Erfinder: **Heber, Kurt, Dr.-Ing., Im Laimacker 62,**
**D-7802 Merzhausen (DE)**

(74) Vertreter: **Patentanwälte Dipl.-Ing. Hans Schmitt**
**Dipl.-Ing. Wolfgang Maucher, Dreikönigstrasse 13,**
**D-7800 Freiburg i.Br. (DE)**

## Beschreibung

Die Erfindung bezieht sich auf einen Messkondensator, der ein elektrisches Feld erzeugt, das gegenüber Einflüssen der Aussenwelt empfindlich ist. Ein derartiger Kondensator kann vielfältige Messaufgaben wahrnehmen: Messung von Gaskonzentrationen, Drücken, Entfernungen, Verschiebungen, Zählvorgängen usw. Die Elektroden eines derartigen Kondensators müssen also so angeordnet sein, dass entweder das Kondensatorfeld in die Aussenwelt hinausreicht (Streufeld), oder aber dass die zu messenden Zustände der Aussenwelt in den Raum zwischen den Kondensatorelektroden eindringen können, wie z.B. in der US 3 858 097 beschrieben.

Bisher bekannte Messkondensatoren für die genannte Aufgabenstellung beruhen meist auf dem Prinzip der Streufeldkondensatoren, da diese zweidimensional aufgebaut sein können und so leichter zu fertigen sind. Anwendungstechnische Bedingungen fordern meist, die Kondensatorelektroden gegen die Aussenwelt elektrisch zu isolieren oder chemisch beständig zu machen. Derartige Kondensatoren werden deshalb üblicherweise durch einen geeigneten Überzug abgedeckt, der jedoch stets zugleich die Empfindlichkeit des Messkondensators herabsetzt. Um dies zu kompensieren, strebt man sehr kleine Abstände zwischen den Kondensatorelektroden an, muss dann jedoch auch eine entsprechend geringe Ausdehnung der Streufelder in Kauf nehmen sowie eine erhöhte Empfindlichkeit gegen Verschmutzung, Ablagerungen, Betauung usw.

Die vorliegende Erfindung entspringt somit der Aufgabe, einen Aufbau eines Messkondensators anzugeben, bei dem sich die gewünschten Umweltbedingungen ausreichend deutlich auswirken können, der gleichzeitig chemisch, mechanisch und thermisch ausreichend beständig und stabil ist und eine ausreichende Messempfindlichkeit aufweist. Diese Aufgabe wird erfindungsgemäss dadurch gelöst, dass die Kondensatorelektroden jeweils einzeln in Hülsen aus einem geeigneten gebrannten keramischen Werkstoff sitzen. Keramische Werkstoffe besitzen sämtliche geforderten Schutzeigenschaften, zugleich aber eine hohe Dielektrizitätskonstante. Auf diese Weise kann die Wandstärke der Hülse den mechanischen, chemischen und elektrischen Anforderungen angepasst werden, ohne die elektrische Kapazität des Messkondensators zu stark absinken zu lassen. Die Elektroden stehen erfindungsgemäss einzeln. Sie liegen also grundsätzlich nicht in der Ebene der Sockelfläche, in der sie befestigt sind und die die Grenze des Messraumes bildet. So können gleichzeitig eine hohe effektive Kondensatorfläche und ein grosser Elektrodenabstand erreicht werden, so dass Verschmutzungen nur geringfügige Auswirkungen haben.

Weiterhin wird erfindungsgemäss eine hohe Empfindlichkeit der Messung dadurch erreicht, dass in enger räumlicher Nähe zum Messkondensator, insbesondere ohne grössere Temperaturdifferenzen, ein Bezugskondensator angeordnet und die Reihenschaltung der beiden Kondensatoren als Halbbrücke betrieben wird. Es ist vorteilhaft, wenn der Bezugskondensator nach vollständiger mechanischer Fertigung der Kondensatoreinheit noch abgleichbar ist, um Fertigungstoleranzen ausgleichen zu können oder spezifische Signalgrössen zuzulassen.

Der der Erfindung zugrunde liegende Gedanke und mögliche anwendungstechnische Ausgestaltungen dieses Gedankens werden aus den Abbildungen ersichtlich. Die Abbildungen können jedoch nur Beispiele möglicher Ausgestaltungen sein und den erfindungsgemässen Gedanken nicht vollständig beschreiben. Die Abbildungen zeigen im einzelnen:

Fig. 1: die grundsätzliche Anordnung eines offenen Messkondensators in quaderförmigen Keramikhülsen,

Fig. 2: eine zylindersymmetrische Ausführung des Messkondensators mit direkt angesetztem Bezugskondensator,

Fig. 3: eine Ausführung des Messkondensators nach Fig. 2 mit zusätzlichen Elektroden und elektrischen Bauelementen.

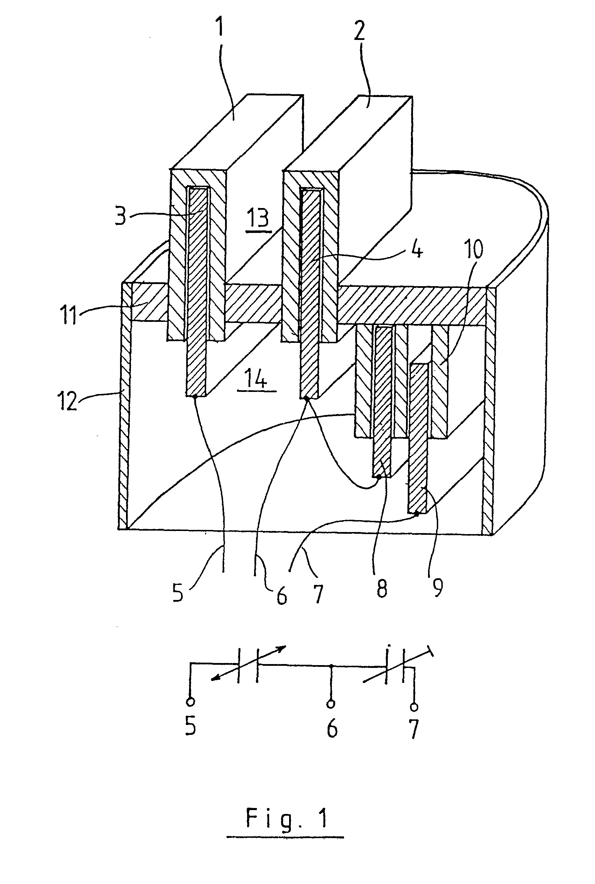

Fig. 1 ist ein perspektivisches Schnittbild durch eine grundsätzliche Anordnung des Messkondensators. Dieser besteht im wesentlichen aus den beiden quaderförmigen Keramikkörpern 1 und 2, die im Innern die Kondensatorelektroden 3 und 4 enthalten. Diese Kondensatorelektroden ragen so in den Messraum 13 hinein, dass sie zwischen sich ein ausreichend grosses Messvolumen definieren. Die quaderförmigen Körper 1 und 2 sitzen in einem Sockel 11, der den Messraum 13 gegen den Aussenraum 14 abtrennt und mit Hilfe einer, vorzugsweise metallischen, Fassung 12 in der allgemeinen Trennwand zwischen Messraum 13 und Aussenraum 14 (nicht dargestellt) befestigt werden kann. Die Fassung 12 kann auch sonstige elektrische oder mechanische Aufgaben wahrnehmen.

Die Elektroden 3 und 4 des Messkondensators enden in elektrischen Anschlüssen 5 und 6. Eine der Elektroden, hier die Elektrode 4, besitzt eine weitere interne Verbindung zum Bezugskondensator, der hier als Aufbau aus drei Trennwänden 10 und zwei Elektroden 8 und 9 dargestellt wurde.

Die Elektrode 8 des Bezugskondensators ist hier direkt mit der Elektrode 4 des Messkondensators verbunden, während die Elektrode 9 des Bezugskondensators über eine Anschlussleitung 7 herausgeführt ist. In der Zeichnung wurde angedeutet, dass die Elektrode 9 nicht vollständig zwischen die Trennwände 10 des Bezugskondensators eindringt: Es besteht also die Möglichkeit, durch mehr oder weniger tiefes Einsenken der Elektrode 9 zwischen die Trennwände 10 den Bezugskondensator auf einen gewünschten Wert abzugleichen. In der hier dargestellten elektrischen Schaltung bilden Mess- und Bezugskondensator eine Halbbrücke, wie im unteren Teil der Fig. 1 schematisch dargestellt. Die Anschlüsse des elektrischen Schaltbildes tragen die Bezugsnummern der Anschlussleitungen der jeweiligen Kondensatorelektroden. Es besteht nun die Möglichkeit, den Bezugskondensator so abzugleichen, dass das Mittelpunktsignal der Halbbrücke am Anschluss 6 bei einem bestimmten Messzustand im Messraum 13 entweder genau Null beträgt oder aber einen definierten, von Null verschiedenen Wert besitzt. Dem Fachmann sind auch andere Schaltungen bekannt, mit deren Hilfe die Kapazitäten elektrischer Kondensatoren gemessen werden können.

In der erfindungsgemässen Ausführung werden die Messkondensatoren stets eine sehr kleine Kapazität aufweisen, typisch kleiner als 10 pF, da zwischen den einzelnen Elektroden ein ausreichender Abstand eingehalten werden muss. Es ist daher ein erfindungswesentliches Merkmal, dass dem Messkondensator in der gleichen Baueinheit ein Bezugskondensator beigegeben wird, der möglichst auch in der gleichen Technik hergestellt ist und der im wesentlichen die gleichen Temperatureinflüsse erleidet wie der Messkondensator. Auf diese Weise können die Kapazitätsänderungen des Messkondensators, die das gewünschte Messignal darstellen, durch Differenzbildung gegen die Kapazität des Bezugskondensators gemessen werden. Die in der Fig. 1 dargestellte elektrische Verbindungsleitung zwischen den Elektroden 8 des Bezugskondensators und 4 des Messkondensators bezieht sich auf die Kapazitätsmessung durch eine Halbbrücke Bei anderen schaltungstechnischen Aufbauten wird die Anschlussleitung der Elektrode 8 getrennt herauszuführen sein.

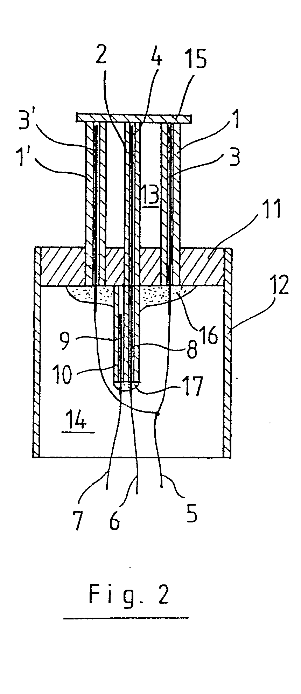

Fig. 2 zeigt eine bevorzugte Ausführungsform des erfindungsgemässen Messkondensators. Hier wurde insbesondere eine symmetrische Ausführung gewählt, in der eine Kondensatorelektrode 4 symmetrisch zwischen zwei parallel geschalteten Kondensatorenelektroden 3 bzw. 3' sitzt. Eine derartige Anordnung berücksichtigt, dass üblicherweise eine der beiden Elektroden eines Kondensators mit einer Spannungsquelle niedriger Impedanz verbunden ist, die also relativ unempfindlich gegen Fremdspannungen ist, während die andere Elektrode nur hochohmig belastet werden darf und deshalb gegen Fremdspannungen zu schützen ist. Die letztgenannte Kondensatorelektrode bildet also in der Anordnung nach Fig. 2 die Messelektrode 4. Die hier gewählte Schnittdarstellung lässt offen, ob es sich bei den Hülsen 1, 1' und 2 um quaderförmige Keramikkörper handelt, wie in Fig. 1 dargestellt, oder um rohrförmige Keramikkörper. Im ersteren Fall würden die Elektroden 3, 3' und 4 vorzugsweise durch Metallfolien, durch direkt in die Hohlräume der Keramikkörper eingefüllte und dann eingebrannte Leitpasten, durch Metallisierungstechniken der Halbleitertechnologie (Vacuumtechniken) o. ä. realisiert sein, während bei Keramikrohren neben den erwähnten Dickschichtpasten vorzugsweise Metalldrähte zu verwenden wären. Die Verwendung rohrförmiger Keramikhülsen hätte den weiteren Vorteil, einen Zutritt der Messgrösse in den Messraum 13 aus nahezu allen Richtungen zu gestatten, da keine Trennwände gebildet werden. Und schliesslich liegt es nahe, drahtförmige Kondensatorelektroden 3 und 3' bzw. 4 gleichzeitig als Zuleitungsdrähte 5 bzw. 6 zu verwenden. Das gleiche gilt für den Keramikkörper 10 des Bezugskondensators: Hier können Keramikrohre mit mehreren Längsbohrungen verwendet werden, wodurch dann die Elektrode 8 des Bezugskondensators durch den gleichen Draht gebildet werden kann, der einerseits die Messelektrode 4 des Messkondensators und andererseits die Zuleitung 6 hierzu darstellt. In einer weiteren Bohrung des Keramikkörpers 10 kann die Bezugselektrode 9, ebenfalls in Drahtform, angeordnet sein, die ebenfalls gleichzeitig die Zuleitung 7 bildet und die auf sehr einfache Weise zum Abgleich innerhalb der Bohrung in Längsrichtung verschoben werden kann.

Bei allen Metallisierungstechniken muss darauf geachtet werden, das die jeweilige Kondensatorelektrode möglichst dicht an der Innenfläche der Hülsen anliegt, um kapazitive Verluste durch Luftstrecken zu vermeiden. Bei Verwendung massiver Elektroden (Metallfolie, Draht) müssen diese deshalb die Hohlräume möglichst vollständig ausfüllen. Leitpasten oder Metallisierungen der Halbleitertechnologie werden grundsätzlich auf die Wände aufgebracht und vermeiden so dieses Problem.

Die Anordnung nach Fig. 2 lässt auch eine weitere Aufteilung einer oder beider der Elektroden 3, 4 des Messkondensators in mehr als zwei Einzelelektroden zu. Die jeweils günstigste Anordnung ist nach anwendungstechnischen Gesichtspunkten zu bestimmen. Die Anordnung enthält weiterhin eine Abdeckplatte 15, die die Keramikhülsen gegeneinander versteift und gleichzeitig, bei der Verwendung von rohrförmigen Hülsen, diese stirnseitig abdichten kann. Geeignete Verbindungstechniken zwischen den Keramikkörpern sind dem Fachmann bekannt. Die Rohrhülsen sind zum Aussenraum 14 hin durch eine Abdichtung 16 abgeschlossen. Diese kann aus dem gleichen Werkstoff hergestellt sein, mit dem der Keramikkörper 10 des Bezugskondensators an der Sockelfläche 11 befestigt ist. Vorzugsweise sind hier geeignete, dem Fachmann bekannte härtbare Giesswerkstoffe zu verwenden. Für den erfindungsgemässen Gedanken ist es nicht wesentlich, dass der Bezugskondensator, wie in Fig. 2 dargestellt, direkt auf dem Sockel 11 aufsitzt, sondern er kann auch in einiger Entfernung von diesem angeordnet oder insbesondere gegenüber der Achse der Messelektrode 4 versetzt oder gekippt sein. Der Werkstoff des Sockels muss nicht ebenfalls ein Keramikmaterial sein. Vielmehr wird er nach Massgabe der thermischen Eigenschaften, der mechanischen und elektrischen Belastbarkeit usw. auszuwählen sein.

Die Elektrode 9 des Bezugskondensators muss, sofern dieser Kondensator abgleichbar ist, fixiert werden. Dies erfolgt durch eine Abdeckung 17, die zweckmässigerweise aus dem gleichen Werkstoff wie Abdichtung 16 bestehen kann. Es liegt nahe, hiermit gegebenenfalls gleichzeitig auch die Elektrode 8 des Bezugskondensators zu fixieren.

Die Keramikhülsen 12 können schliesslich noch mit einem Überzug versehen sein, der die verschiedensten Aufgaben erfüllen kann: Verringerung der Rauhigkeit, spezifische chemische Beständigkeit, Verbesserung der Benetzungseigenschaften der Oberfläche, spezifische optische oder elektrische Eigenschaften, aber auch im Sinne der Messtechnik, spezifische Reaktionsfähigkeit gegenüber der Messgrösse oder spezifische Abweisung unerwünschter Einflussgrössen. So kann z. B. eine Glasur die Oberflächenrauhigkeit verbessern und damit die Empfindlichkeit gegen Verschmutzung verringern, Siliconüberzüge weisen Wasserkondensation ab usw.

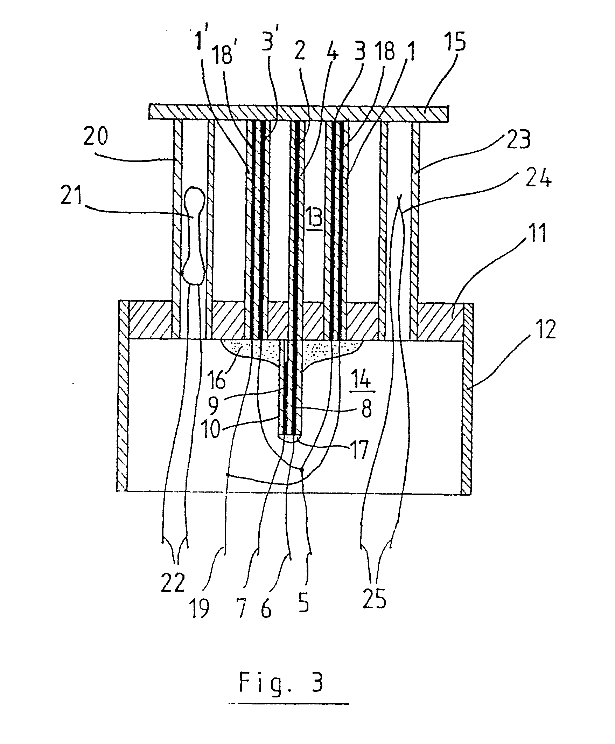

Die Anordnung nach Fig. 3 stellt gegenüber der Anordnung nach Fig. 2 eine Erweiterung dar. Hier erhalten die aussenliegenden Hülsen 3, 3' des Messkondensators weitere, ausserhalb des Messraums liegende Hohlräume, in denen nach der gleichen Technologie weitere Elektroden 18, 18' angeordnet sind. Diese Elektroden können insbesondere als Masseelektroden dienen, um einen gewissen Schutz des Messkondensators gegen Störspannungen von aussen zu bewirken. In dem hier dargestellten Fall erfolgt der Anschluss der Elektroden 18, 18' durch eine gemeinsame Zuleitung 19.

Weitere mögliche Erweiterungen des Messkondensators betreffen eine bauliche Verknüpfung mit anderen elektronischen Bauelementen, wie sie aus anwendungs- oder fertigungstechnischen Gesichtspunkten sinnvoll sein kann. In Fig. 3 wurden beispielhaft zwei weitere Keramikhülsen 20 und 23 dargestellt, deren eine (20) einen Temperaturfühler Pt 100, 21 mit seinen Zuleitungen 22 enthält, während in der Hülse 23 ein Thermoelement 24 mit seinen Anschlussleitungen 25 dargestellt ist.

Ebenso ist denkbar, in derartigen Hülsen magnetische, akustische, mechanische oder andere elektrische Fühler oder Geber anzuordnen. In einer weiteren Ausgestaltung ist es möglich, den Elektroden 18 bzw. 18' z. B. unter Mitwirkung der Abdeckkappe 15, die Funktion eines elektrischen Heizers zuzuweisen, um die Kondensatorelektroden 3 bzw. 3' auf einer definierten Temperatur halten zu können. Zu dem gleichen Zweck können auch Heizer in den Hülsen 20 bzw. 23 angeordnet sein.

**Patentansprüche**

1. Offener Messkondensator mit zwei Elektroden (3, 4), die in einem zwischen ihnen liegenden freien Raum als Messraum (13) ein elektrisches Feld erzeugen, mit einer festen Verbindung aus elektrisch nicht leitendem Material zwischen den zwei Elektroden, die zusammen mit diesen den Messraum begrenzt, und mit einem Bezugskondensator, der in unmittelbarer Nachbarschaft der zwei Elektroden in gutem Wärmekontakt und in elektrischer Verbindung, insbesondere in Form einer Reihenschaltung zur Bildung einer Halbbrücke, mit ihnen in der festen Verbindung angeordnet ist, dadurch gekennzeichnet, dass die zwei Elektroden (3, 4) einzeln stehend angeordnet sind und jede von ihnen im Bereich des Messraums (13) vollständig von einer Hülse (1, 2) aus einem gebrannten keramischen Werkstoff umgeben ist, wobei die Elektroden (3, 4) die Hohlräume der Hülsen weitgehend ausfüllen oder dicht an deren Innenflächen anliegen, und dass die feste Verbindung die Form eines Sockels (11) aufweist, in denen die Hülsen fest eingesetzt sind, und in dem sowohl der Bezugskondensator als auch die Leitungen (5, 6, 7) für die elektrische Verbindung zwischen dem Bezugskondensator und den zwei Elektroden angeordnet sind.

2. Offener Messkondensator nach Patentanspruch 1, dadurch gekennzeichnet, dass die Hülsen jeweils aus mehreren Einzelteilen zusammengesetzt sind.

3. Offener Messkondensator nach Patentanspruch 1 oder 2, dadurch gekennzeichnet, dass die Hülsen der zwei Elektroden und/oder weitere gleichartige Hülsen (20, 23), jeweils ausserhalb des Messraumes, auch andere Elektroden (21, 24) und/oder weitere elektronische Bauelemente enthalten.

4. Offener Messkondensator nach einem der Patentansprüche 1 bis 3, dadurch gekennzeichnet, dass die Hülsen aus Röhrchen mit einer oder mehreren Längsbohrungen bestehen.

5. Offener Messkondensator nach einem der Patentansprüche 1 bis 3, dadurch gekennzeichnet, dass die Hülsen zum Messraum hin mit einem weiteren Überzug versehen sind, der eine definierte mechanische oder chemische Oberflächenbeschaffenheit herstellt.

6. Offener Messkondensator nach Patentanspruch 1, dadurch gekennzeichnet, dass eine oder beide der zwei Elektroden aus mehreren Einzelelektroden bestehen.

7. Offener Messkondensator nach Patentanspruch 1, dadurch gekennzeichnet, dass der Bezugskondensator abgleichbar ist und so eine Kompensation von Fertigungstoleranzen des Messkondensators ermöglicht.

**Revendications**

1. Condensateur de mesure ouvert à deux électrodes (3, 4) produisant un champ électrique dans l'espace libre entre elles servant d'espace de mesure (13), comprenant un élément fixe de liaison entre les deux électrodes, en un matériau non conducteur électrique et délimitant l'espace de mesure en dehors des électrodes, et un condensateur de référence, disposé dans l'élément fixe de liaison, au voisinage immédiat des deux électrodes et en bon contact thermique et électrique avec celles-ci, notamment sous forme d'un montage électrique en série pour former un demi-pont, caractérisé en ce que les deux électrodes (3, 4) sont disposées individuellement debout et qu'elles sont individuellement et totalement entourées, dans l'espace de mesure (13), d'une gaine (1, 2) en un matériau céramique cuit, les électrodes (3, 4) remplissant une grande partie des cavités des gaines ou étant plaquées contre les surfaces intérieures de celles-ci, et que l'élément fixe de liaison a la forme d'une base (11) dans laquelle les gaines sont fixées et qui loge tant le condensateur de référence que les fils de contact (5, 6, 7) reliant le condensateur de référence aus deux électrodes.

2. Condensateur de mesure ouvert suivant la revendication 1, caractérisé en ce que les gaines sont composées de plusieurs éléments chacune.

3. Condensateur de mesure ouvert suivant les revendications 1 ou 2, caractérisé en ce que les gaines des deux électrodes et/ou d'autres gaines semblables (20, 23) contiennent, toujours en dehors de l'espace de mesure, d'autres électrodes (21, 24) et/ou d'autres éléments électroniques.

4. Condensateur de mesure ouvert suivant les revendications 1 à 3, caractérisé en ce que les gaines sont formées par des tubes comprenant un ou plusieurs canaux longitudinaux.

5. Condensateur de mesure ouvert suivant les revendications 1 à 3, caractérisé en ce que la surface des gaines exposée à l'espace de mesure est recouverte d'une autre couche lui assurant une caractéristique mécanique ou chimique bien définie.

6. Condensateur de mesure ouvert suivant la revendication 1, caractérisé en ce que l'une ou les deux des dites électrodes consistent en plusieurs électrodes élémentaires.

7. Condensateur de mesure ouvert suivant la revendication 1, caractérisé en ce que le condensateur de référence peut être ajusté, permettant alors de compenser les tolérances de fabrication du condensateur de mesure.

## Claims

1. Open measuring capacitor with two electrodes (3, 4), which generate an electric field in the free space between them, as a measuring area (13), with a permanent connection of non-conducting material between the two electrodes which, together with these, constitutes the boundary of the measuring area, and with a reference capcitor which, located in the immediate vicinity of the two electrodes, with good thermal contact and connected electrically in the form of a series circuit to produce a half-bridge in particular, is permanently connected to them, characterized by the fact that the two electrodes (3, 4) are individual, upright electrodes, and each one is completely surrounded by a sleeve (1, 2) of fired ceramic material within the measuring area (13), whereby the electrodes (3, 4) fill out the hollow spaces in the sleeves to a great extent or make close contact with their inner surfaces, and that the permanent connection takes the form of a base (11), into which the sleeves are permanently mounted, and which accommodates both the reference capacitor as well as the lines (5, 6, 7) for the electrical connection between the reference capacitor and the two electrodes.

2. Open measuring capacitor in accordance with patent claim 1, characterized by the fact that each sleeve comprises several individual components.

3. Open measuring capacitor in accordance with patent claim 1 or 2, characterized by the fact that the sleeves for the two electrodes and/or other identical sleeves (20, 23), outside the measuring area in each case, also contain other electrodes (21, 24) and/or other electronic components.

4. Open measuring capacitor in accordance with one of patent claims 1 to 3, characterized by the fact that the sleeves consist of small tubes with one or several longitudinal slots.

5. Open measuring capacitor in accordance with one of patent claims 1 to 3, characterized by the fact that the sleeves pointing into the measuring area are covered with an additional coating, which produces a defined mechanical or chemical surface character.

6. Open measuring capacitor in accordance with patent claim 1, characterized by the fact that one or both of the two electrodes consist of several individual electrodes.

7. Open measuring capacitor in accordance with patent claim 1, characterized by the fact that the reference capacitor can be calibrated, thus enabling compensation for production tolerances of the measuring capacitor.

1/3

Fig. 1

2/3

Fig. 2

3/3

Fig. 3